# EUROPEAN PATENT APPLICATION

(11) **EP 3 879 009 A1**
(43) Date of publication of application: **15.09.2021**
(21) Application number: 21161120.7
(22) Date of filing: 05.03.2021
(51) Int. Cl.: C25F 3/16, C25F 7/00, C25F 7/02

(54) **ELECTROPOLISHING SYSTEM WITH PROBE FOR INTERNAL DEBURRING OF PART AND METHOD OF USING THE SAME**

(30) Priority: 11.03.2020 US 202016815922
(71) Applicant: Honeywell International Inc., Charlotte, NC 28202 (US)
(72) Inventor: YANG, Qiang, Charlotte, NC North Carolina 28202 (US); CAO, Gangmin, Charlotte, NC North Carolina 28202 (US); LV, Jingkang, Charlotte, NC North Carolina 28202 (US)
(74) Representative: Lucas, Peter Lawrence

(57) **Abstract**

A probe assembly of an electropolishing system for electropolishing a surface of a part is disclosed. The probe assembly includes a supply line, at least a part of which is flexible. The supply line defines a fluid passage for a flow of an electrolyte therethrough. The probe assembly also includes an electrode with at least one aperture. The electrode is attached to the supply line and is fluidly connected to the fluid passage for receiving the electrolyte and outputting the electrolyte via the at least one aperture. The electrode is configured to be electrically charged for electropolishing the surface of the part. Also, the probe assembly includes a sensor that is attached to at least one of the supply line and the electrode. The sensor is configured to provide substantially real-time feedback corresponding to the electropolishing of the surface of the part. Methods of using the system are also disclosed.

## Description

### TECHNICAL FIELD

The present disclosure generally relates to electropolishing systems and, more particularly, relates to an electropolishing system with a probe assembly for internal deburring of a part and a method of using the same.

### BACKGROUND

It is often necessary to manufacture parts with predetermined surface finish characteristics. For example, some parts may be employed in a fluid system, but if the part exhibits excessive surface roughness, the fluid flow may be negatively affected. Thus, the surface of the part is often formed and/or conditioned such that the surface roughness is below a predetermined threshold.

Furthermore, some manufacturing methods are known to produce part surfaces that exhibit relatively high surface roughness. Additive manufacturing techniques, for example, may produce surfaces that are wavy, burred, or otherwise rough due to the layer-by-layer formation process. Other manufacturing techniques may produce similarly rough surfaces. Moreover, an additively manufactured part may need internal structures built for supporting overhanging portions, etc., and it may be necessary to eliminate those structures via a deburring process.

Part surfaces may be deburred and smoothed in a number of ways. For example, grinding and/or directing a flow of abrasives at a surface may decrease surface roughness. However, it may be difficult or impossible to access some surfaces (e.g., internal surfaces of the part) using these techniques. Other methods, such as heat treatment and electropolishing, may be of limited usefulness because they are time consuming, inconvenient, and/or expensive. Furthermore, it may be difficult to control the deburring process using these processes. More specifically, controlling the deburring depth, evenly deburring a part, and/or providing localized deburring can be difficult.

Accordingly, it is desirable to provide an improved manufacturing system and method for electropolishing a part surface. It is also desirable to provide a useful, convenient, and cost-effective system and method for electropolishing an internal surface of a part. Moreover, it is desirable to provide an electropolishing system and method that provides a high degree of control of the polishing process. Other desirable features and characteristics of the present disclosure will become apparent from the subsequent detailed description and the appended claims, taken in conjunction with the accompanying drawings and the foregoing technical field and background.

### SUMMARY

According to various embodiments, an improved probe assembly of an electropolishing system for electropolishing a surface of a part is disclosed. The probe assembly includes a supply line, at least a part of which is flexible. The supply line defines a fluid passage for a flow of an electrolyte therethrough. The probe assembly also includes an electrode with at least one aperture. The electrode is attached to the supply line and is fluidly connected to the fluid passage for receiving the electrolyte and outputting the electrolyte via the at least one aperture. The electrode is configured to be electrically charged for electropolishing the surface of the part. Also, the probe assembly includes a sensor that is attached to at least one of the supply line and the electrode. The sensor is configured to provide substantially real-time feedback corresponding to the electropolishing of the surface of the part.

Additionally, an electropolishing system configured for electropolishing the part is disclosed. The system includes a direct current (DC) power source and a pump assembly configured to pump an electrolyte. The system further includes a cathode probe assembly that includes a supply line, an electrode, and a sensor. The supply line is at least partly flexible and defines a fluid passage that is fluidly connected to the pump assembly for supplying the electrolyte to the electrode. The electrode includes an internal passage that receives the electrolyte from the fluid passage of the supply line. The electrode includes at least one aperture that outputs the electrolyte from the internal passage and out of the electrode. The electrode is electrically connected to the DC power source to be negatively charged thereby while the part is positively charged by the DC power source to electropolish a surface of the part. Additionally, the sensor is supported proximate the electrode and is configured to provide substantially real-time feedback corresponding to the electropolishing of the surface of the part.

Also provided according to various embodiments is a method of operating an electropolishing system. The method includes introducing a probe assembly of the electropolishing system within a part to position an electrode of the probe assembly proximate an internal surface of the part. The method also includes selectively pumping electrolyte through a flexible line of the probe assembly to provide the electrolyte to the electrode, which outlets the electrolyte from at least one aperture of the electrode. Furthermore, the method includes selectively charging the electrode to a negative polarity while selectively charging the part to a positive polarity to electropolish a surface of the part. Also, the method includes providing, via a sensor of the probe assembly, substantially real-time feedback corresponding to the electropolishing of the surface of the part.

### DESCRIPTION OF THE DRAWINGS

The exemplary embodiments will hereinafter be described in conjunction with the following drawing figures, wherein like numerals denote like elements, and wherein:
FIG. 1 is a schematic view of an electropolishing system according to example embodiments of the present disclosure;
FIG. 2 is a schematic view of a probe assembly of the electropolishing system of FIG. 1 shown during operation according to example embodiments of the present disclosure;
FIG. 3 is an isometric view of the probe assembly of the electropolishing system of FIG. 1 according to additional embodiments of the present disclosure;
FIG. 4 is an isometric section view of an electrode of the probe assembly of FIG. 3;
FIG. 5 is an isometric view of a spacer of the probe assembly of FIG. 3; and
FIG. 6 is an isometric view of the probe assembly of the electropolishing system of FIG. 1 according to additional embodiments of the present disclosure.

### DETAILED DESCRIPTION

The following detailed description is merely exemplary in nature and is not intended to limit the application and uses. Furthermore, there is no intention to be bound by any expressed or implied theory presented in the preceding technical field, background, brief summary or the following detailed description. In addition, those skilled in the art will appreciate that embodiments of the present disclosure may be practiced in conjunction with any type of electropolishing system, and that the system described herein is merely one exemplary embodiment of the present disclosure. It should be noted that many alternative or additional functional relationships or physical connections may be present in an embodiment of the present disclosure.

The present disclosure provides an improved electropolishing system suitable for deburring a part (e.g., a part formed via additive manufacturing techniques). The electropolishing system is highly useful on a variety of parts. The system may be useful for electropolishing hard-to-reach internal surfaces of a part. The system may provide a high degree of control for the electropolishing process as well. The system may be convenient and cost-effective for producing high quality parts with precision-crafted surfaces.

In some embodiments, the electropolishing system of the present disclosure may include a probe assembly that includes an electrode and a supply line providing electrolyte thereto. The supply line may be at least partly flexible to allow the electrode to be introduced within a part and to flex, bend, etc. as needed for moving within the part. Additionally, both the part and probe assembly may be submerged within the electrolyte. The electrode and the part may be charged to opposite polarities. In some embodiments, the electrode is charged negatively as a cathode and the part is charged positively as an anode.

During operation, the electrode may be received within the part, with the power source powered ON, with the electrode being pulled or pushed across the internal surface of the part, and with the electrolyte being pumped out of the electrode toward the internal surface. As such, the part (anode) loses electrons in the reaction, becoming ions that diffuse into the electrolyte, contributing to the removal of burrs on the part, and resulting in a deburred surface.

The probe assembly may also include a spacer that maintains the electrode spaced apart at a distance from the internal surface. The spacer may include one or more resilient projections that resiliently deflect to maintain separation between the electrode and the part. There may be a plurality of projections that cooperatively center the electrode within an internal passage of the part.

Furthermore, the probe assembly may include one or more sensors for monitoring the electropolishing process. The sensor(s) may provide substantially real-time feedback such that the user and/or control system can monitor the polishing process with precision. For example, in some embodiments, the sensor may include a camera that provides visual feedback (e.g., provides one or more real-time images, provides a video feed, etc.).

The deburring of the part can be controlled in various ways. In some embodiments, the polishing process may be controlled and adjusted selectively based on the feedback provided from the camera or other sensor. For example, movement of the probe assembly may be selectively controlled, and a dwell time that the electrode spends at a particular area of the part can be controlled. If surface roughness is too high, the electrode may be placed near the area longer to remove more material (i.e., deburr to a greater depth). Moreover, the system may selectively control the power source (e.g., by turning the power source ON and OFF and/or by changing voltage) to adjust and control the electropolishing process. Furthermore, the system may selectively control the mass flow rate of the electrolyte moving through the electrode (e.g., by selectively controlling an electrolyte pump).

Accordingly, the system 100 and its method of use provide high-quality electropolished parts in an efficient and low-cost process. The system 100 and method may be used for polishing a variety of complex parts, for example, parts with relatively small, curving internal passages. The system and method also provide real-time control of the deburring process, which improves deburring quality. The system and method of the present invention are also highly adjustable and adaptable.

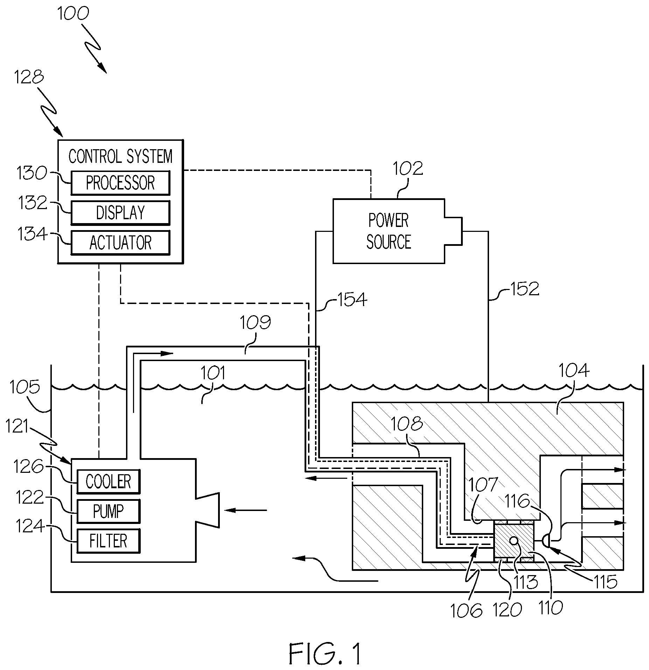

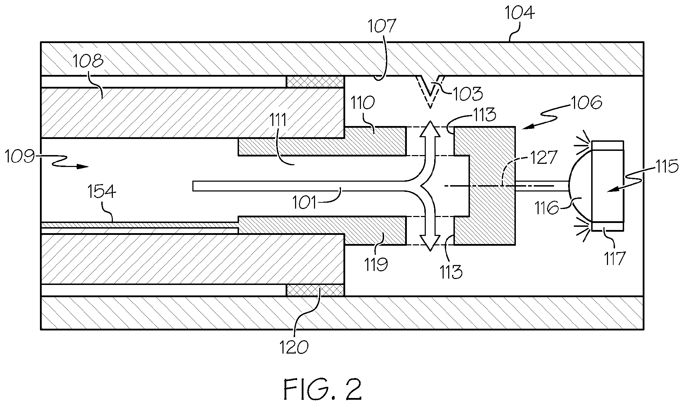

Referring initially to FIGS. 1 and 2, an electropolishing system 100 for electropolishing a part 104 is illustrated according to example embodiments of the present disclosure. The system 100 may be configured for electropolishing a variety of parts 104, such as parts for a turbomachine (e.g., a gas turbine engine). The system 100 may be configured for electropolishing one or more internal surfaces 107 of the part 104. As will be discussed in relation to FIG. 2, the system 100 may be used to reduce the size of burrs 103 on the internal surface 107 of the part 104. Accordingly, the roughness of the surface 107 may be reduced (i.e., the surface 107 can be polished to be smoother) using the system 100.

The system 100 may include a container 105 that holds an electrolyte 101. The electrolyte 101 may be a known electropolishing liquid electrolyte material. The electrolyte 101 may be chosen and tailored to the particular material of the part 104. The container 105 may be large enough for at least partial submersion of the part 104 within the electrolyte 101.

The system 100 may additionally include a power source 102. The power source 102 may be a DC power source. In some embodiments, the power source 102 may be operably connected to a processor 130 of a control system 128. The processor 130 may generate control signals for controlling the power source 102. In some embodiments, the control system 128 may turn the power source 102 ON and OFF. Also, in some embodiments, the control system 128 may change the voltage and/or current output by the power source 102.

The system 100 may further include a pump assembly 121. The pump assembly 121 may include a fluid pump 122 of a known type that is configured for pumping the electrolyte 101. In some embodiments, the pump 122 is operably connected to the processor 130. In some embodiments, the processor 130 may generate control signals for controlling the pump 122. In some embodiments, the control system 128 may turn the pump 122 ON and OFF. Also, in some embodiments, the control system 128 may change the speed of the pump 122 to change the mass flow rate of the pumped electrolyte 101.

The system 100 may further include a probe assembly 106. The probe assembly 106 may generally include a supply line 108 and an electrode 110. The electrode 110 may be received within the part 104 and moved along the internal surfaces 107. The supply line 108 may supply electrolyte 101 from the pump 122 to the electrode 110.

The supply line 108 may comprise one or more elongate, flexible hoses, tubes, hollow cylinders, or other conduit structures that define a continuous fluid passage 109 for the electrolyte 101. At least part of the supply line 108 may be flexible, bendable, resilient, elastic, etc. The supply line 108 may also be electrically insulative. In some embodiments, the supply line 108 may be made from an insulative rubber or other nonconductive polymeric material. In other embodiments, the supply line 108 may be covered and/or coated in such a nonconductive material. The supply line 108 may be operably connected to the pump 122 for pumping electrolyte 101 through the fluid passage 109. The supply line 108 may be submersible (or may include one or more submersible segments) for submersion in the electrolyte 101.

The electrode 110 may be small and cylindrical. The electrode 110 may be hollow so as to define an internal passage 111. The electrode 110 may include one or more apertures 113. The apertures 113 may be through holes that extend through an outer wall 119 of the electrode 110. The outer wall 119 may be rounded, hollow, and cylindrical so as to extend along an axis 127 (FIG. 2). The apertures 113 may be arranged about the axis 127. The apertures 113 may be spaced apart around the axis 127. The plurality of apertures 113 may be arranged radially with respect to the axis 127. Thus, the apertures 113 may eject the electrolyte 101 radially from the electrode 110.

The electrode 110 may be made from an electrically conductive metal material. The electrode 110 may be sized, formed, and/or dimensioned according to the size, form, and/or dimension of the internal surfaces 107 of the part 104. The probe assembly 106 may further include an electrode lead 154 that electrically connects the electrode 110 to the power source 102 (at a negative terminal of the power source 102). At least part of the electrode lead 154 may be coextensive with the supply line 108 as shown in FIGS. 1 and 2. The system 100 may further include a part lead 152 that electrically connects the part 104 to the power source 102 (to a positive terminal of the power source) as shown in FIG. 1. Accordingly, the part 104 may be positively charged and the electrode 110 may be negatively charged by the power source 102 for a DC electropolishing process.

The electrode 110 may be attached to the supply line 108. In some embodiments, the electrode 110 may be attached at a terminal end of the supply line 108. The outer wall 119 of the electrode 110 may be mechanically attached to the supply line 108 via one or more known fasteners.

The electrode 110 may also be fluidly connected to the fluid passage 109 of the supply line 108. As shown in FIG. 2, the internal passage 111 may be fluidly connected at one end to the fluid passage 109 to receive electrolyte 101 therefrom. The electrode 110 apertures 113 may provide a fluid outlet for the electrolyte 101 out of the probe assembly 106.

Thus, the electrode 110 and part of the supply line 108 may be introduced into the part 104. The pump 122 may operate to move the electrolyte 101 through the supply line 108 to the electrode 110 and out of the apertures 113. Electrolyte 101 ejected from the electrode 110 may be recirculated back to the pump 122.

In some embodiments, the system 100 may include a filter 124 for the electrolyte 101. The filter 124 may be integrated within the pump assembly 121 with the pump 122. Accordingly, the filter 124 may be fluidly connected within the flow circuit of electrolyte along with the pump 122, the supply line 108, and the electrode 110. Electrolyte 101 from the electrode 110 along with the byproduct of electropolishing may move into the pump assembly 121, and the filter 124 may remove one or more byproducts with known components and through a known process. Accordingly, because of the filter 124, the pump 122 can supply fresh and filtered electrolyte to the electrode 110.

Furthermore, the system 100 may include an electrolyte cooler 126. The cooler 126 may include one or more heat exchangers that remove heat from the electrolyte 101. The cooler 126 may be integrated in the pump assembly 121 with the pump 122 and filter 124. Accordingly, the cooler 126 may be fluidly connected within the flow circuit of electrolyte along with the pump 122, the filter 124, the supply line 108, and the electrode 110. The electropolishing process can generate heat, and this heat can be transferred with the recirculating flow of electrolyte 101 from the electrode 110 back to the pump assembly 121. The electrolyte cooler 126 may cool the electrolyte 101 such that the pump 122 can supply fresh and cooled electrolyte to the electrode 110.

As stated, the supply line 108 may be flexible. As such, the supply line 108 may be fed into and/or out of the part 104 on a nonlinear path. For example, the supply line 108 may bend, flex, etc. to move along internal surfaces 107 that curve along a nonlinear axis. The supply line 108 may bend and curve as it moves through one or more pipes, passages, and/or internal chambers of the part 104.

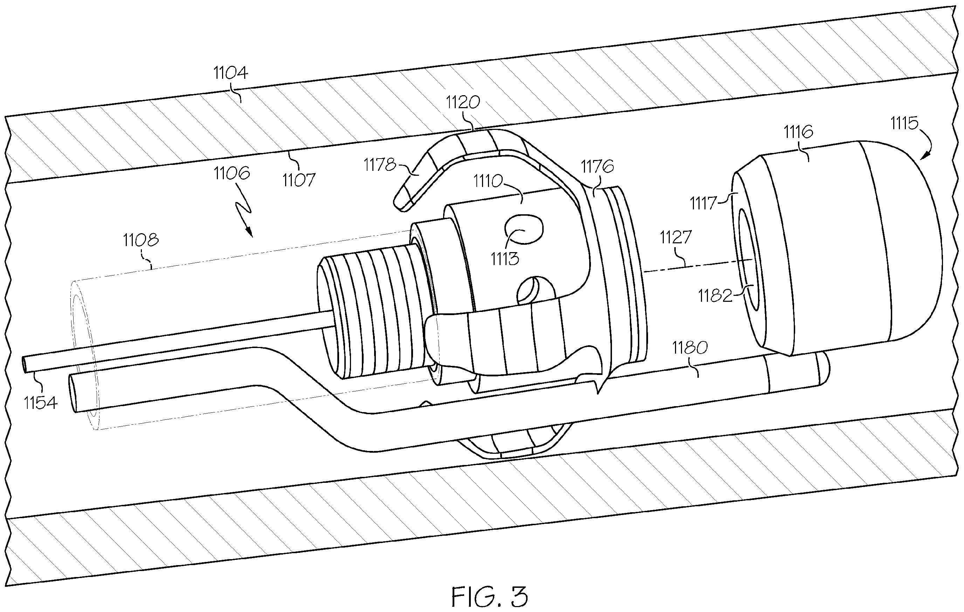

Furthermore, the probe assembly 106 may include one or more spacers 120. The spacer(s) 120 may have a variety of shapes and constructions as will be discussed in reference to FIGS. 3-6. The spacer 120 may be attached to the supply line 108 and/or the electrode 110. The spacer 120 may be made of an electrically insulative, nonconductive material. As shown in the example of FIG. 1, the spacer 120 may encircle the electrode 110 and project radially from the electrode 110. As shown in the example of FIG. 2, the spacer 120 may encircle the supply line 108, proximate the junction with the electrode 110, and the spacer 120 may project radially therefrom. The spacer 120 may abut against the internal surface 107 so as to maintain separation between the internal surface 107 and the electrode 110 (i.e., to prevent a short circuit between the part 104 and the electrode 110). In some embodiments, the spacer 120 may be made from a resiliently flexible material and an electrically nonconductive, insulative material.

The probe assembly 106 may additionally include a sensor 115. The sensor 115 may detect one or more characteristics, conditions, environments, or otherwise provide substantially real-time feedback corresponding to the electropolishing of the surface 107 of the part 104. Feedback signals from the sensor 115 may be transferred to the processor 130. The control system 128 may also include a user interface, such as a display 132 for displaying the feedback from the sensor 115 to the user. Accordingly, the user may rely on the real-time feedback for making various adjustments during the electropolishing process as will be discussed.

The sensor 115 may be a camera 116 (i.e., scope) in some embodiments. The camera 116 may be configured to video the area proximate the electrode 110 and/or the internal surface 107 nearby during the electropolishing process. The sensor 115 may also include a light 117 that illuminates this area for the camera 116. The display 132 may show the video fed from the camera 116, thereby allowing the user to monitor the deburring process. The user may control movement of the electrode 110 according to this video feedback such that the electropolishing process is controlled. Moreover, if the electrolyte is too dark and the view on the display 132 is obscured, then the power source 102 may be powered OFF, and fresh electrolyte 101 may continue to be provided by the pump assembly 121 to clear the view. In this way, the internal surfaces 107 and the deburring process may be monitored with high accuracy as to whether further deburring is needed.

The sensor 115 may be of a different type in additional embodiments of the present disclosure. For example, the sensor 115 may be a thermometer, an infrared heat sensor, etc. for detecting temperature of the electrolyte and/or the internal surface 107 for monitoring the electropolishing process in real-time. In further embodiments, the sensor 115 may include a surface roughness scanner (e.g., a sensor with a laser that reflects off the internal surface 107 to detect its surface roughness) for monitoring the electropolishing process.

The system 100 may further include an actuator 134. The actuator 134 may be of any suitable type, such as an electric or hydraulic actuator. The actuator 134 may be attached to the supply line 108 and/or the part 104, and the actuator 134 may be operable for actuating the electrode 110 relative to the part 104. In some embodiments, the actuator 134 may be attached to the supply line 108, and the actuator 134 may push or pull the electrode 110 through the part 104 to move the electrode 110 near the surface 107 to be deburred. The actuator 134 may be integrated into the control system 128, and the processor 130 may generate control signals for actuating the electrode 110 relative to the internal surface 107 of the part.

Referring now to FIGS. 3-5, additional embodiments of the probe assembly 1106 will be discussed. The probe assembly 1106 may share features discussed above with respect to FIGS. 1 and 2. Features that correspond to those of FIGS. 1 and 2 will be indicated with corresponding reference numbers increased by 1000.

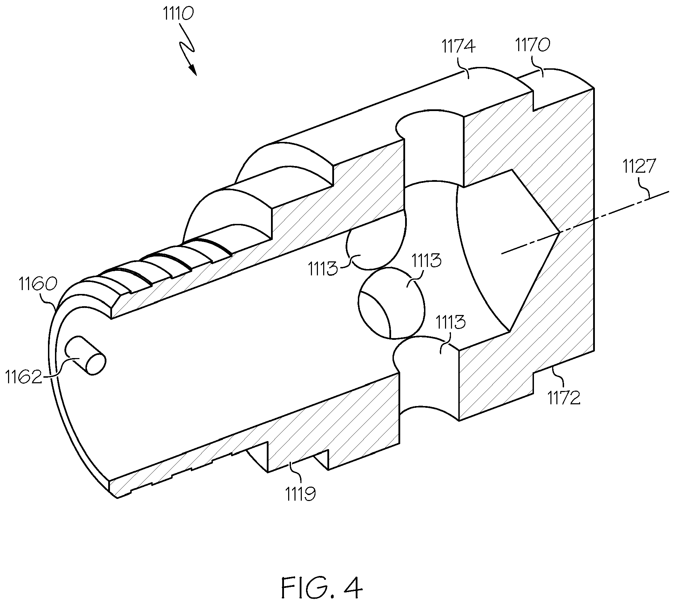

As shown in FIGS. 3 and 4, the electrode 1110 may be hollow and cylindrical. The outer wall 1119 may include an open end 1160 and a closed end 1170, which are separated along the axis 1127. The open end 1160 may include a knurled or otherwise textured outer diameter area for connecting to the supply line 1108. The end 1160 may also include an inwardly projecting post 1162 for electrically connecting to the lead 1154 to the electrode 1110. Furthermore, the closed end 1170 may include a circular collar 1172 that encircles the axis 1127.

The outer wall 1119 of the electrode 1110 may additionally include an intermediate portion 1174 that is annular and that encircles the axis 1127. The intermediate portion 1174 may be disposed between the ends 1160, 1170 and may project radially outward. The plurality of apertures 1113 may be through-holes extending radially through the intermediate portion 1174. The apertures 1113 may be spaced apart equally about the axis 1127. The apertures 1113 may be symmetrically disposed about the axis 1127.

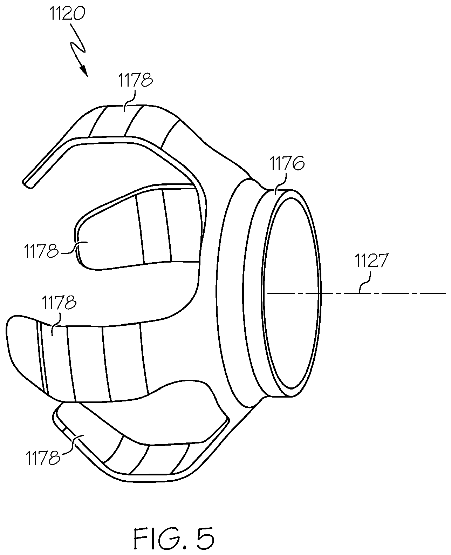

As shown in FIG. 5, the spacer 1120 may be a one-piece unitary member that includes an annular base 1176. The spacer 1120 may further include one or more projections 1178 (e.g., arms, ribs, posts, ridges, bumps, etc.) that project away from base 1176. There are four projections 1178 in the illustrated embodiment, but it will be appreciated that there may be more or less than four. The projections 1178 may be somewhat claw-shaped so as to project at an angle away from the base 1176 and back toward the axis 112. The base 1176 may be mounted on the collar 1170 of the electrode 1110 with the projections 1178 extending toward the end 1160. The projections 1178 may abut against the internal surfaces 1107 of the part 1104. The projections 1178 may collectively center the electrode 1110 within a tube or passage of the part 1104. Also, the projections 1178 may be resiliently flexible and may elastically deform to maintain space between the part 1104 and the electrode 1110 and/or to maintain the electrode 1110 centered within the tube or passage of the part 1104.

Furthermore, the sensor 1115 may be a camera 1116 that is supported by a post 1180 that extends axially from the supply line 1108. The camera 1116 may be spaced apart axially from the electrode 1110 and a lens 1182 may be a wide-angle lens that faces along the axis toward the electrode 1110. The light 1117 may encircle the lens 1182.

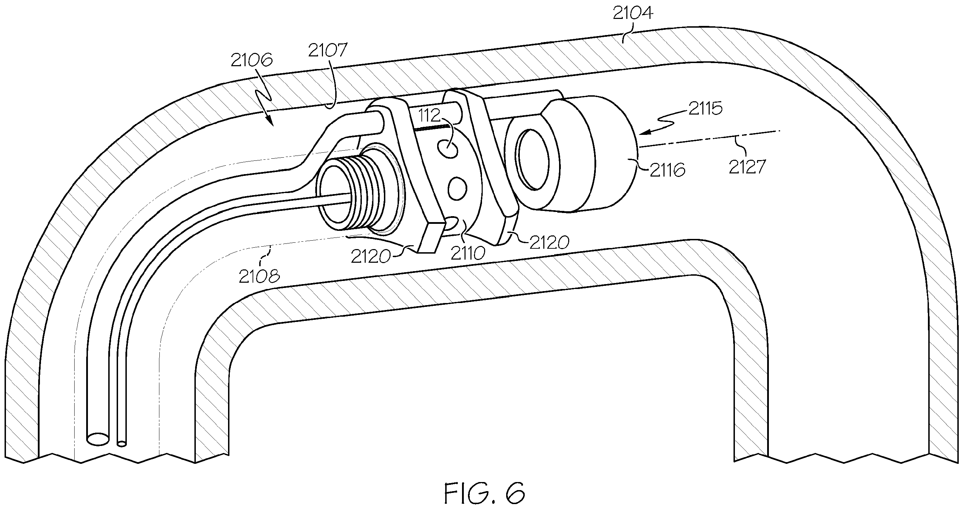

Referring now to FIG. 6, additional embodiments of the probe assembly 2106 will be discussed. The probe assembly 2106 may share features discussed above with respect to FIGS. 3-5. Features that correspond to those of FIGS. 3-5 will be indicated with corresponding reference numbers increased by 1000.

The supply line 2108, the electrode 2110, and the camera 2116 may be substantially similar to the embodiments of FIGS. 3-5. However, the spacers 2120 may be generally polygonal in shape. As shown, the spacers 2120 may be flat, triangular pieces that are arranged perpendicular to the axis 2127 and that extend about the electrode 2110. The three corners of the spacers 2120 may be truncated and may abut against the internal surface 2107 of the part 2104 for separating the electrode 2110 from the internal surface 2107 and/or for centering the electrode 2110 within a passage of the part 2106.

During operation, the control system 128 may turn the power source 102 and pump assembly 121 ON while the electrode 110, 1110, 2110 is received within the part 104, 1104, 2104. The electrolyte 101 may be pumped to the electrode 110, 1110, 2110 and out toward the internal surface 107, 1107, 2107. As such, burrs 103 on the part 104, 1104, 2104 (the anode) lose electrons in the reaction, becoming ions that diffuse into the electrolyte 101, and the size of the burr 103 is reduced and/or eliminated resulting in a deburred internal surface 107, 1107, 2107.

It will be appreciated that the electrode 110, 1110, 2110 is small and compact for localizing the deburring effect to particular areas of the part 104, 1104, 2104. In other words, the current density is much higher at the places near the electrode 110, 1110, 2110, and the deburring strength is higher proximate the electrode 110, 1110, 2110. This provides high precision, control, and effectiveness for the deburring process.

Moreover, the process may be highly efficient. The amount of electrolyte used may be relatively low because it is directed at the surface 107, 1107, 2107, thereby increasing effectiveness. Also, there may be low DC power consumption because the deburring reaction is focused on areas near the electrode 110, 1110, 2110, which increases efficiency and lowers operating costs. Furthermore, because the pump assembly 121 filters out and eliminates the accumulation of ions and pumps fresh electrolyte 101 to the part, the deburring process is enhanced. The cooler 126 may also provide some cooling to the electrolyte 101 and/or the part 104, 1104, 2104 for enhancing the deburring process as well.

Furthermore, the sensor 115, 1115, 2115 and control system 128 may provide a high degree of control and/or automation for precision electropolishing processes. For example, based on feedback (e.g., video feedback) from the sensor 115, 1115, 2115, the user may control movement of the electrode 110, 1110, 2110, and/or the control system 128 may selectively actuate the probe assembly 106, 1106, 2106 by controlling the actuator 134. In some embodiments, the user may provide a user command to the processor 130, and the processor 130 may process this input and generate a control command for the actuator 134 for actuating the probe assembly 106. In some embodiments, the processor 130 may automatically control the actuator 134 based on feedback from the sensor 115, 1115, 2115. Additionally, power source 102 and/or pump assembly 121 may be controlled according to user input, according to feedback from the sensor 115, 1115, 2115, etc. as discussed above to selectively adjust and perfect the electropolishing process.

Accordingly, the system 100 and its method of use provide high-quality electropolished parts in an efficient and low-cost process. The system 100 and method may be used for polishing a variety of complex parts. The system and method also provide real-time control of the deburring process, which improves deburring quality. The system and method of the present invention are also highly adjustable and adaptable.

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim. The process steps may be interchanged in any order without departing from the scope of the invention as long as such an interchange does not contradict the claim language and is not logically nonsensical.

While at least one exemplary embodiment has been presented in the foregoing detailed description, it should be appreciated that a vast number of variations exist. It should also be appreciated that the exemplary embodiment or exemplary embodiments are only examples, and are not intended to limit the scope, applicability, or configuration of the disclosure in any way. Rather, the foregoing detailed description will provide those skilled in the art with a convenient road map for implementing the exemplary embodiment or exemplary embodiments. It should be understood that various changes can be made in the function and arrangement of elements without departing from the scope of the disclosure as set forth in the appended claims and the legal equivalents thereof.

## Claims

1. A probe assembly of an electropolishing system for electropolishing a surface of a part, the probe comprising:
a supply line, at least a part of which is flexible, the supply line defining a fluid passage for a flow of an electrolyte therethrough;
an electrode with at least one aperture, the electrode attached to the supply line and fluidly connected to the fluid passage for receiving the electrolyte and outputting the electrolyte via the at least one aperture, the electrode configured to be electrically charged for electropolishing the surface of the part; and
a sensor that is attached to at least one of the supply line and the electrode, the sensor configured to provide substantially real-time feedback corresponding to the electropolishing of the surface of the part.

2. The probe assembly of claim 1, wherein the electrode is configured to be negatively charged by a direct current (DC) power source with the part being positively charged by the DC power source for electropolishing the surface of the part.

3. The probe assembly of claim 1, further comprising a spacer that is attached to at least one of the supply line and the electrode and projecting therefrom, the spacer configured to abut against the part and maintain separation between the electrode and the part; and
wherein, optionally, the spacer is resiliently flexible.

4. The probe of claim 1, further comprising an electrical lead that is electrically connected to the electrode, wherein the electrical lead and the supply line are at least partly coextensive.

5. The probe of claim 1, wherein the sensor is a camera configured to provide substantially real-time video of an area proximate the electrode for visually monitoring electropolishing of the surface of the part.

6. The probe of claim 5, wherein the sensor includes a light that is configured to illuminate the area proximate the electrode.

7. The probe of claim 1, wherein the electrode is attached to a terminal end of the supply line.

8. The probe of claim 7, wherein the electrode includes an internal passage and a plurality of apertures, the internal passage fluidly connected to the fluid passage of the supply line for receiving the flow of the electrolyte, the plurality of apertures providing a fluid outlet for the electrolyte out of the probe assembly.

9. The probe of claim 8, wherein the electrode defines a longitudinal axis, and wherein the plurality of apertures is disposed on the electrode and directed radially with respect to the longitudinal axis.

10. An electropolishing system configured for electropolishing a part, the electropolishing system comprising:
a direct current (DC) power source;
a pump assembly configured to pump an electrolyte; and
the probe assembly of claim 1.

11. The system of claim 10, further comprising an electrolyte filter that is fluidly connected within a flow circuit of the electrolyte, the flow circuit circulating the electrolyte from the pump assembly, through the fluid passage of the supply line, out the electrode, and back to the pump assembly; and
wherein the electrolyte filter is operable to filter the electrolyte flowing within the flow circuit.

12. The system of claim 10, further comprising an electrolyte cooler that is fluidly connected to a flow circuit of the electrolyte, the flow circuit circulating the electrolyte from the pump assembly, through the fluid passage of the supply line, out the electrode, and back to the pump assembly;
wherein the electrolyte cooler is operable to cool the electrolyte for supplying cooled electrolyte to the electrode via the supply line.

13. The system of claim 10, further comprising an actuator that is attached to at least one of the probe assembly and the part, the actuator operable to actuate the probe assembly relative to the part.

14. The system of claim 13, further comprising a control system with a processor configured to receive an input signal corresponding to the electropolishing of the surface of the part; and
wherein the control system is configured to control relative movement of the probe assembly and the part according to the received input signal.

15. A method of operating an electropolishing system, the method comprising:
introducing a probe assembly of the electropolishing system within a part to position an electrode of the probe assembly proximate an internal surface of the part;
selectively pumping electrolyte through a flexible line of the probe assembly to provide the electrolyte to the electrode, which outlets the electrolyte from at least one aperture of the electrode;
selectively charging the electrode to a negative polarity while selectively charging the part to a positive polarity to electropolish a surface of the part; and
providing, via a sensor of the probe assembly, substantially real-time feedback corresponding to the electropolishing of the surface of the part.
